# EUROPEAN PATENT APPLICATION

(11) **EP 2 835 253 A2**
(43) Date of publication of application: **11.02.2015**
(21) Application number: 14179618.5
(22) Date of filing: 04.08.2014
(51) Int. Cl.: B29D 30/30, B29D 30/20

(54) **Component applying/cutting apparatus for a tire building machine and method for applying a component on a tire building machine**

(30) Priority: 07.08.2013 US 201313960863
(71) Applicant: The Goodyear Tire & Rubber Company, Akron, Ohio 44316 (US)
(72) Inventor: Lescaud, Olivier, B-6600 Bastogne (BE); Royer, Thierry, B-6700 Frassem (BE); Marechal, Frederic Marie Bernard, B-6781 Selange (BE); Richir, André Marie Raymond Louis Christian, B-6700 Arlon (BE); Ballet, Thierry, F-03310 Neris Les Bains (FR)
(74) Representative: Kutsch, Bernd

(57) **Abstract**

An apparatus (200) for cutting and applying a component to a tire during a tire building process is disclosed. The apparatus (200) comprises an application head (210) rotatable about a vertical axis and fitted to an X-Y table (220) such that the component (205) can be applied to a curved tire profile spinning on a drum (126, 140) of a tire building machine (100). The application head (210) is configured to feed the component (205) vertically downward to a predetermined position coincident with an intersection of the vertical axis of the application head (210) and a horizontal plane defined by a horizontal axis of rotation of the drum (126, 140) of the tire building machine (100). Also, a method for applying a component to one tire or multiple tires on a tire building machine (100) is disclosed using the apparatus (200).

## Description

### Field of Invention

The present invention relates to pneumatic tires, and more particularly, to a machine for assembling pneumatic tires and to a respective method and system.

### Background of the Invention

Changes in road conditions may cause the performance of the vehicle tires to become less than satisfactory and result in driver dissatisfaction. For example, tires on a vehicle are optimally expected to contribute to maximum fuel efficiency on dry, straight roads; maximum handling performance on roads having severe curves; and wet traction performance is sought on water covered roads. To achieve a tire having a versatility to perform satisfactorily on all possible road conditions is the goal of all tire manufacturers.

Turrets having two drums have been designed for tire building machines heretofore to provide for the assembly of tire components and performing other tire building operations at two distinct positions. Where the drums have been rotated 180 degrees from a first position to a second position, a pit in the floor has been utilized so that the drums may be at a suitable height above the floor for performing manual tire assembly operations. When the drum shafts have been coaxial, a reinforced turret construction has been required to support the weight of the drums to be carried at substantial distances from the axis of rotation of the turret determined by the length of the drum shafts.

Horizontal rotation of the turret about a vertical access has previously required a large cleared space proximate the turret for allowing such rotation. Further, greater efficiency in all facets of the tire building process is a constant goal.

### Summary of the Present Invention

The invention relates to an apparatus in accordance with claim 1, a system in accordance with claim 6 and a method in accordance with claim 8.

Dependent claims refer to preferred embodiments of the invention.

According to a preferred feature of the apparatus, the application head feeds a strip of the component to the predetermined position.

According to still another preferred feature of the apparatus, operation of the application head is fully automatic and controlled by a microprocessor.

According to yet another preferred feature of the apparatus, a stitcher roll maintains contact with the curved tire profile thereby controlling the vertically fed component.

According to still another preferred feature of the apparatus, a cutter device cuts the component to a predetermined size for the curved tire profile.

A method in accordance with the present invention applies a component to preferably multiple tires on a tire building machine. The method comprises the steps of: orienting an application head to a first predetermined position adjacent to a first green tire rotating on a drum of a tire building machine; feeding the component vertically downward to a second predetermined position coincident with an intersection of a vertical axis of the application head and a horizontal plane defined by a horizontal axis of rotation of the drum of the tire building machine; removing a first part of the component from itself; stitching the first part of the component to the first green tire; moving the application head away from the tire building machine; removing the first green tire from the tire building machine; placing a second green tire onto the drum of the tire building machine; orienting the application head to the first predetermined position adjacent to the second green tire rotating on the drum of a tire building machine; feeding the component vertically downward to the second predetermined position; removing a second part of the component from itself; and stitching the second part of the component to the second green tire.

According to another preferred aspect of the method, a further step includes removing the second green tire from the tire building machine.

According to still another preferred aspect of the method, a further step includes feeding the first part of the component to the predetermined position.

According to yet another preferred aspect of the method, a further step includes automatically controlling the application head with a microprocessor.

According to still another preferred aspect of the method, a further step includes maintaining a stitcher roll in contact with the first green tire for controlling the vertically fed component.

According to yet another preferred aspect of the method, a further step includes cutting the component to a predetermined size for a curved tire profile of the first tire.

According to still another preferred aspect of the method, a further step includes maintaining a stitcher roll in contact with the second green tire for controlling the vertically fed component.

An example tire building machine for use with the apparatus/method of the present invention includes a support housing for rotating the machine about a vertical axis, a support frame operatively attached to the support housing such that the support housing rotates the support frame about the vertical axis, a first drum rotatable about a first horizontal axis by a first motor, the first drum and the first motor being secured to the support frame, a first cylinder for horizontally retracting the first drum along the first horizontal axis from an extended position to a retracted position, a second drum rotatable about a second horizontal axis by a second motor, the second horizontal axis being parallel to the first horizontal axis, the second drum and the second motor being secured to the support frame, and a second cylinder for horizontally retracting the second drum along the second horizontal axis from an extended position to a retracted position.

According to another preferred aspect of the example tire building machine, the first cylinder extends the first drum from the retracted position to the extended position.

According to still another preferred aspect of the example tire building machine, the second cylinder extends the second drum from the retracted position to the extended position.

According to yet another preferred aspect of the example tire building machine, the first cylinder and the second cylinder retract the first and second drums simultaneously.

According to still another preferred aspect of the example tire building machine, the first cylinder and the second cylinder extend the first and second drums simultaneously.

An example method for use with the apparatus/method of the present invention includes the steps of: operatively attaching a support frame to a support housing such that the support housing rotates the support frame about a vertical axis; securing a first drum and a first motor being to the support frame; rotating the first drum about a first horizontal axis by the first motor; horizontally retracting the first drum along the first horizontal axis from an extended position to a retracted position by a first cylinder; securing a second drum and a second motor being to the support frame; rotating the second drum about a second horizontal axis by the second motor; and horizontally retracting the second drum along the second horizontal axis from an extended position to a retracted position by a second cylinder.

According to a preferred aspect of the example method, the method further includes the step of extending the first cylinder and the first drum from the retracted position to the extended position.

According to still another preferred aspect of the example method, the method further includes the step of extending the second cylinder and the second drum from the retracted position to the extended position.

According to yet another preferred aspect of the example method, both said retracting steps occur simultaneously.

According to still another preferred aspect of the example method, the method further includes the step of extending both the first and second drums simultaneously to the extended position.

An example system for use with apparatus/method of the present invention includes a support housing for rotating the machine about a vertical axis, a support frame operatively attached to the support housing such that the support housing rotates the support frame about the vertical axis, a first drum rotatable about a first horizontal axis, the first drum being secured to the support frame, a first cylinder for horizontally retracting the first drum along the first horizontal axis from an extended position to a retracted position, a second drum rotatable about a second horizontal axis, the second horizontal axis being parallel to the first horizontal axis, the second drum being secured to the support frame, and a second cylinder for horizontally retracting, simultaneously with the first drum, the second drum along the second horizontal axis from an extended position to a retracted position.

According to another preferred aspect of the example system, the first cylinder extends the first drum from the retracted position to the extended position.

According to another preferred aspect of the example system, the second cylinder extends the second drum from the retracted position to the extended position.

According to yet another preferred aspect of the example system, the first cylinder and the second cylinder retract the first and second drums simultaneously.

According to still another preferred aspect of the example system, the first cylinder and the second cylinder extend the first and second drums simultaneously.

### Brief Description of the Drawings

FIG. 1 is a schematic representation of an example apparatus in accordance with the present invention.
FIG. 2 is a schematic perspective view of a tire building machine for use with the present invention under a first condition.
FIG. 3 is a schematic perspective view of the tire building machine of FIG. 2 under a second condition.
FIG. 4 is a schematic top view of the machine of FIG. 2.
FIG. 5 is a schematic top view of the machine of FIG. 3.
FIG. 6 is a schematic front elevation of an example two drum turret assembly.
FIG. 7 is a schematic side elevation of the example turret assembly taken along line 7--7 in FIG. 6 with the drums removed.
FIG. 8 is a schematic rear elevation of the example turret assembly taken along line 8--8 in FIG. 7 with parts being broken away.
FIG. 9 is schematic fragmentary top view of the example turret assembly taken along line 9--9 in FIG. 6.

### Description of Example Embodiments of the Present Invention

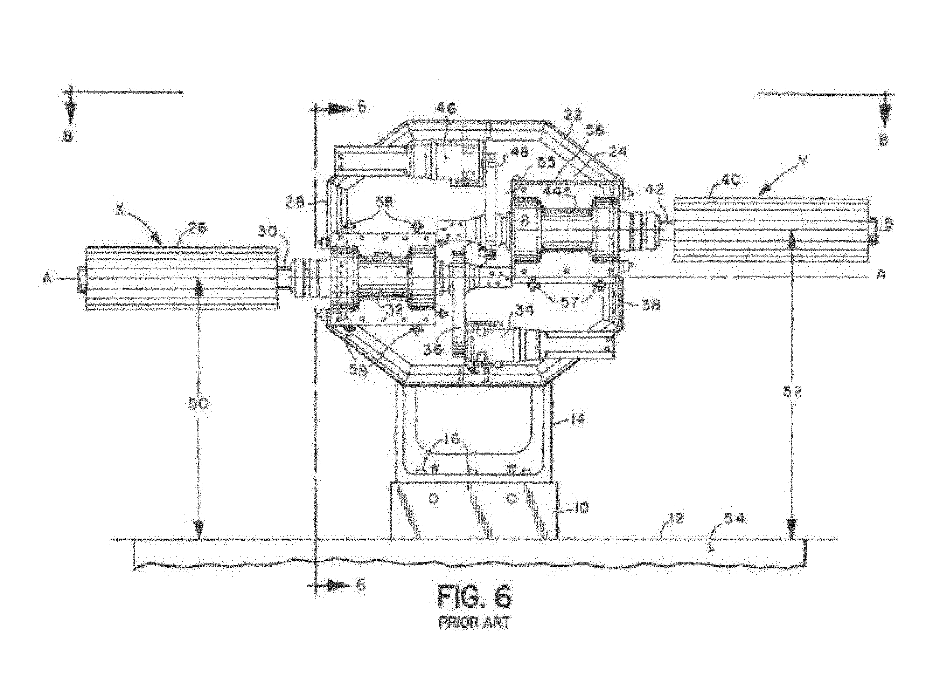

With reference to FIGS. 6, 7, and 8, an example tire building machine with a base 10 is shown mounted on a floor surface 12 and fastened to a turret support housing 14 by bolts 16 or other suitable fasteners. Pillow blocks 18 may be mounted on the housing 14 providing bearings for supporting a turret drive shaft 20. A turret 22 may be mounted on one end of the shaft 20 and may include a turret supporting plate 24.

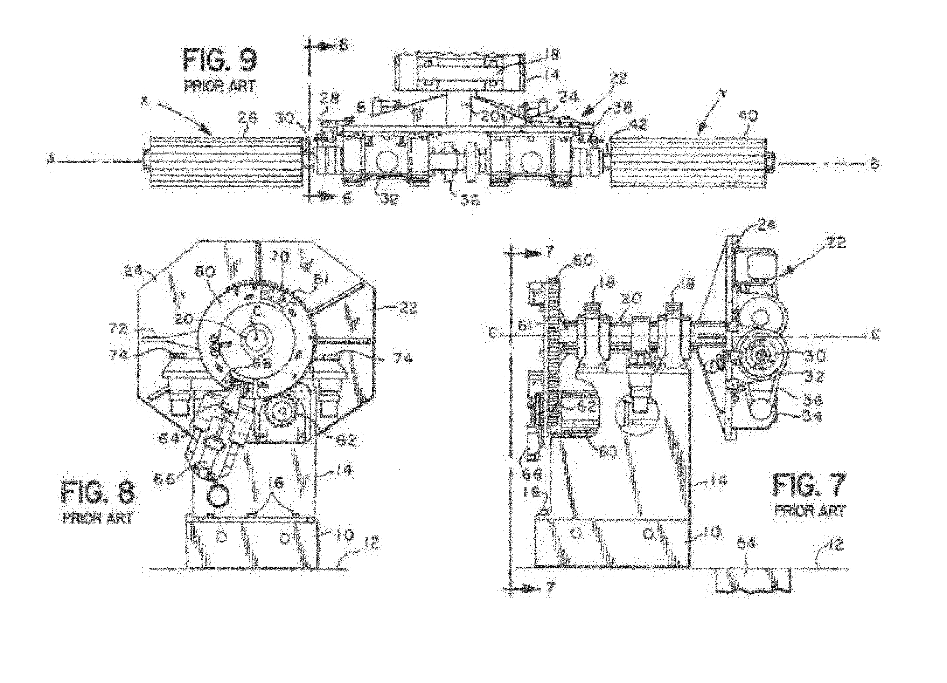

Referring to FIGS. 6 and 9, a first drum 26 may be rotatably mounted on the turret supporting plate 24 and may extend outwardly from a first side 28 of the turret 22 for rotation about a first horizontal axis A—A in a first position X. The first drum 26 may also be known as a slave drum and may be mounted on a slave shaft 30 rotatably supported in a slave bearing 32 mounted on the supporting plate 24. A slave drum drive motor 34 may also be mounted on the supporting plate 24 in a driving relationship with the slave shaft 30 through a slave belt 36 extending around pulleys mounted on the slave shaft 30 and the shaft of the slave drum drive motor 34.

Mounted on a second side 38 of the turret 22 may be a second tire building drum 40 rotatable about a second horizontal axis B--B in a second position Y. The second tire building drum 40, which may be known as a master drum, may be mounted on a master shaft 42 supported in a master bearing 44 mounted on the supporting plate 24. The master shaft 42 may be driven by a master drum drive motor 46 mounted on the supporting plate 24 and may be connected by a master belt 48 to the master shaft through drive pulleys.

As shown in FIG. 6, the axis A--A of the first drum 26 and the axis B--B of the second drum 40 may be in a parallel relationship so that, in an operating position, the first drum 26 may have a first height 50 of about 40 inches (101.6 cm) above the floor surface 12 and the second drum 40 may have a second height 52 of about 50 inches (127 cm) above the floor surface. Thus, when manual operations for applying tire components to the drums 26, 40 are required, the drums 26, 40 may be close to the floor surface 12 in order that the operator may reach the drums.

In addition to the axes A--A and B--B being parallel, the slave shaft 30 may be vertically offset from the master shaft 42 for mitigating the horizontal distance the first drum 26 and second drum 40 extend outwardly/laterally from the first side 28 and second side 38, respectively. This configuration may limit the space required for rotation of the turret 22 and the depth of a pit 54 necessary for permitting rotation of the turret about a horizontal axis C--C of the turret drive shaft 20.

The axes A—A, B--B may be symmetrical about the axis C--C of the turret drive shaft 20. The master bearing 44 may be mounted on the supporting plate 24 in a predetermined position. Edges of the master bearing 44 may be located adjacent registers 55, 56 on the supporting plate 24 with adjusting screws 57 threaded in the plate. Then, the position of the slave bearing 32 may be adjusted by adjusting screws 58, 59 threaded on the supporting plate 24 so that the axis A--A of the first drum 26 is parallel with the axis B--B of the second drum 40, as well as being symmetrical about axis C--C of the turret drive shaft 20. With this adjustment, the first drum 26 and second drum 40 may be in identical positions for the first position X and the second position Y so that tire components may be applied to the drums in identical positions.

Referring to FIGS. 7 and 8, a drive gear 60 may be mounted on a rear end of the turret drive shaft 20. The drive gear 60 may have a semi-circular gear rack 61 engageable by a pinion gear 62 driven by a turret drive motor 63 mounted on the turret support housing 14. Referring to FIG. 8, the drive gear 60 may be rotated from the position shown in FIG. 8 in a clockwise direction 180 degrees so that the turret supporting plate 24, as shown in FIG. 6 will rotate 180 degrees in a counter clockwise direction moving the first drum 26 from the first position X shown in FIG. 6 to the second position Y shown in FIG. 6 and moving the second drum 40 from the second position Y shown in FIG. 6 to the first position X shown in FIG. 6. In the two operating positions X and Y, a cam roller 64 may be actuated by a pneumatic lock 66 extending into a tapered slot 68 or 70 at the operating positions of the turret 22 to lock the turret in an operating position.

In the event the motor 63 does not stop to permit actuation of the cam roller 64 by the pneumatic lock 66, the length of the semi-circular gear rack 61 may be predetermined for disengaging the pinion 60 whereupon the turret drive shaft 20 may continue to rotate and an arm 72, mounted on the turret drive shaft and extending outwardly therefrom, may be positioned to engage shock absorbers 74 mounted on the housing 14. One of the shock absorbers 74 may be provided at each side of the housing 14 to limit the rotation of the turret supporting plate 24 in either direction by engagement with the arm 72.

In an example tire building operation, tire components may be applied to the first drum 26 and the second drum 40 by rotating the drums through actuation of the slave drum drive motor 34 and master drum drive motor 36 in response to suitable controls connected to the motors. After application of the tire components, the cam roller 64 may be released and the turret drive motor 63 actuated in response to suitable controls for rotating the turret 22 through 180 degrees whereby the first drum 26 is moved to the second position Y and the second drum 40 is moved to the first position X, as shown in FIG. 6. Simultaneously with the application of additional tire components on the first drum 26 in the second position Y at the second height 52, tire components may be provided on the second tire drum 40 in the first position X, as shown in FIG. 6. It is understood that the first drum 26 and second drum 40 may be identical or different sizes and types substituted for these drums and adaptable for different tire building operations.

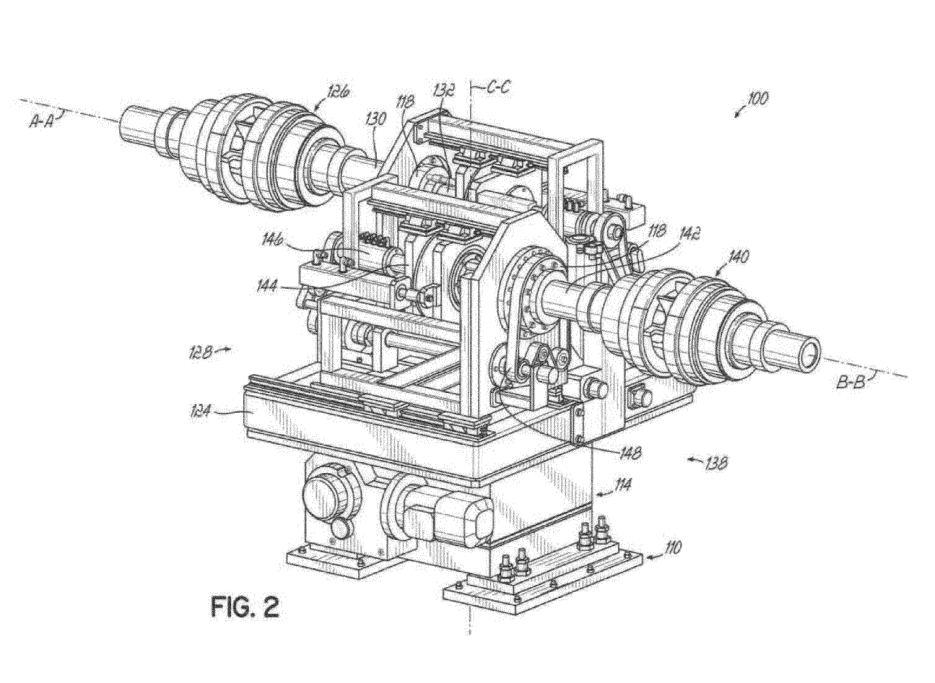

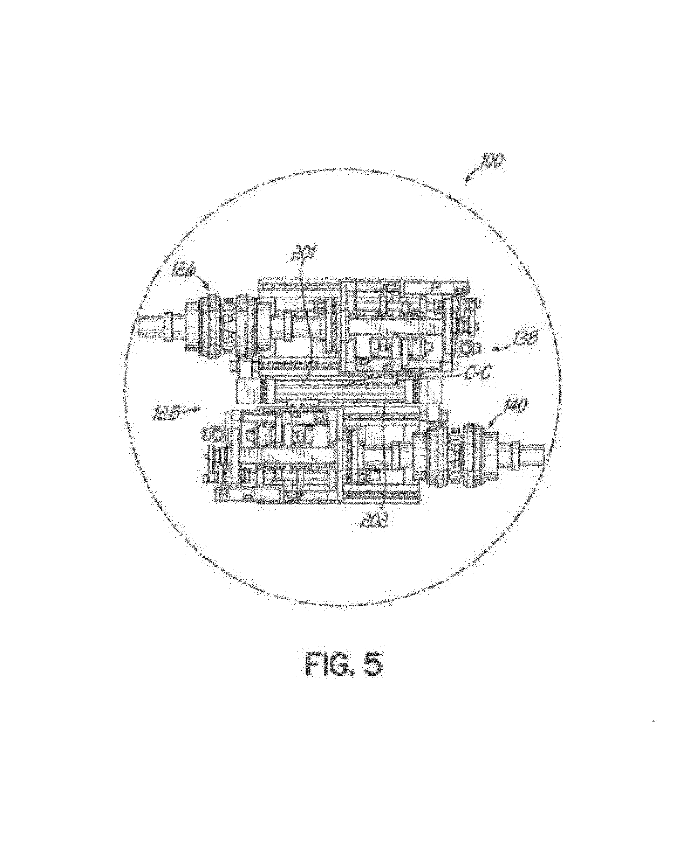

With reference to FIGS. 2-5, an example tire building machine 100 for use with the present invention may include a base 110 mounted on a floor surface and fastened to a turret support housing 114. Referring to FIGS. 2 and 5, a first drum 126 may be rotatably mounted on a turret support frame 124 and may extend outwardly from a first side 128 of the turret support frame 124 for rotation about a first horizontal axis A—A. The first drum 26 may be mounted on a first shaft 130 rotatably supported in a first bearing 132 mounted on the turret support frame 124. A first drum drive motor 134 may also be mounted on the support frame 124 in a driving relationship with the first shaft 130 through a first belt 136 extending around pulleys mounted on the first shaft 130 and the shaft of the first drum drive motor.

Mounted on a second side 138 of the rotatable turret support frame 124 may be a second tire building drum 140 rotatable about a second horizontal axis B--B. The second tire building drum 140 may be mounted on a second shaft 142 supported in a second bearing 144 mounted on the support frame 124. The second shaft 142 may be driven by a second drum drive motor 146 mounted on the support frame 124 and may be connected by a second belt 48 to the second shaft through drive pulleys.

As shown in FIG. 2, the axis A--A of the first drum 126 and the axis B--B of the second drum 140 may be in a parallel relationship so that the first drum 126 and the second drum 140 may have identical heights above the floor surface (as compared to the example machine of FIGS. 6-9. Thus, when manual operations for applying tire components to the drums 126, 140 are required, the drums 126, 140 may be close to the floor surface in order that the operator may reach the drums.

In addition to the axes A--A and B--B being parallel, the first shaft 130 may be horizontally offset from the second shaft 142 for mitigating the horizontal distance the first drum 126 and second drum 140 extend outwardly/laterally from the first side 128 and second side 138, respectively. This configuration, by itself, may limit the space required for rotation of the support frame 124 about a vertical axis C--C by the turret support housing 114. The axes A--A, B--B may be symmetrical about the vertical axis C--C of the turret support housing 114.

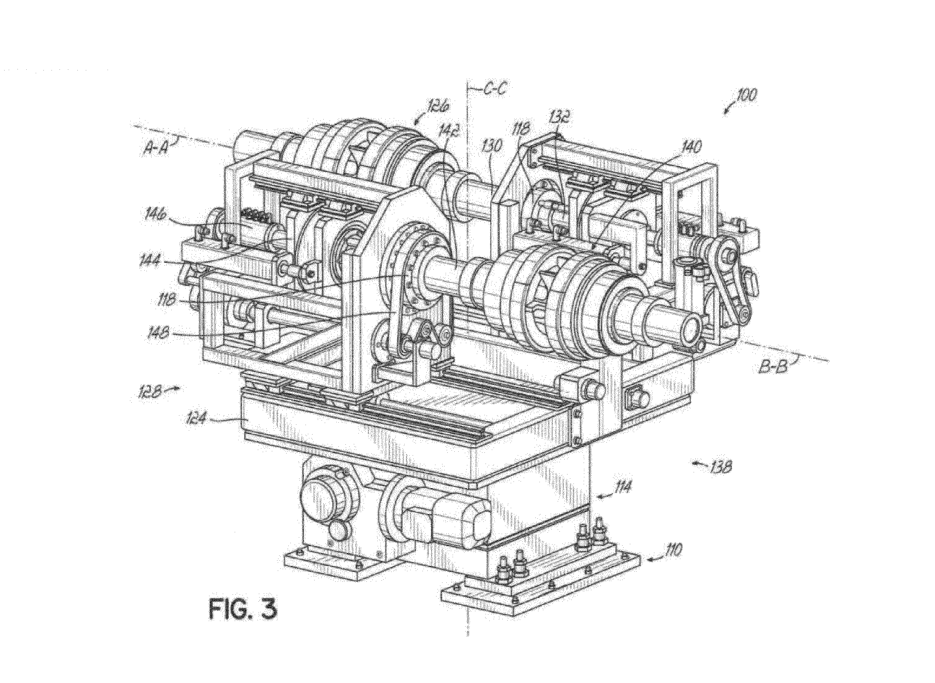

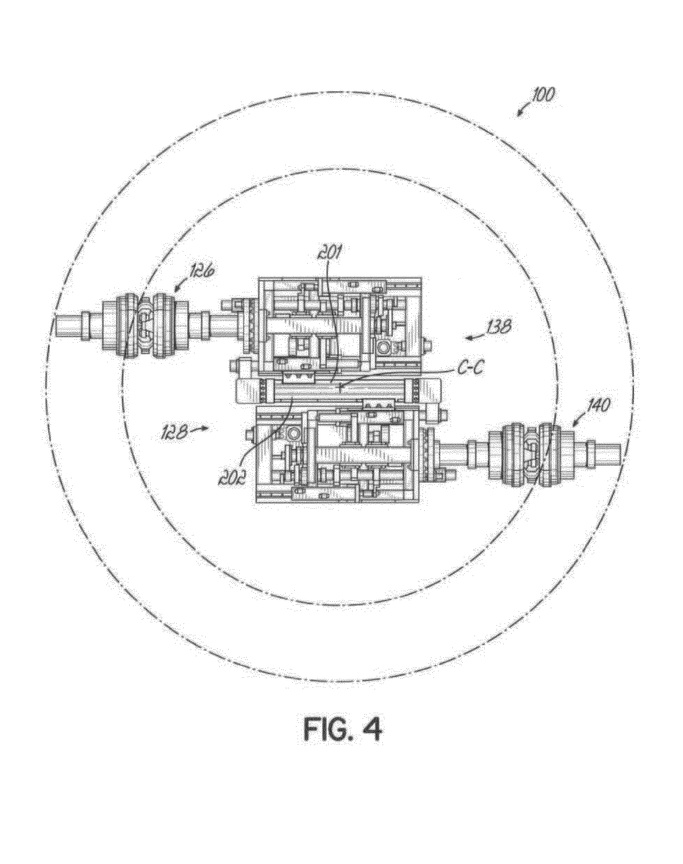

The example tire building machine 100 may further include two cylinders 201, 202 mounted to the support frame 124. The cylinders may horizontally retract the drums 126, 140 so that less space is required around the machine when the turret support housing 114 rotates the machine about the axis C--C (FIGS. 3 & 5). Subsequent to this rotation, the cylinders 201, 202 may extend the drums 126, 140 to their initial position (FIGS. 2 & 4). The cylinders 201, 202 may actuated pneumatically or hydraulically.

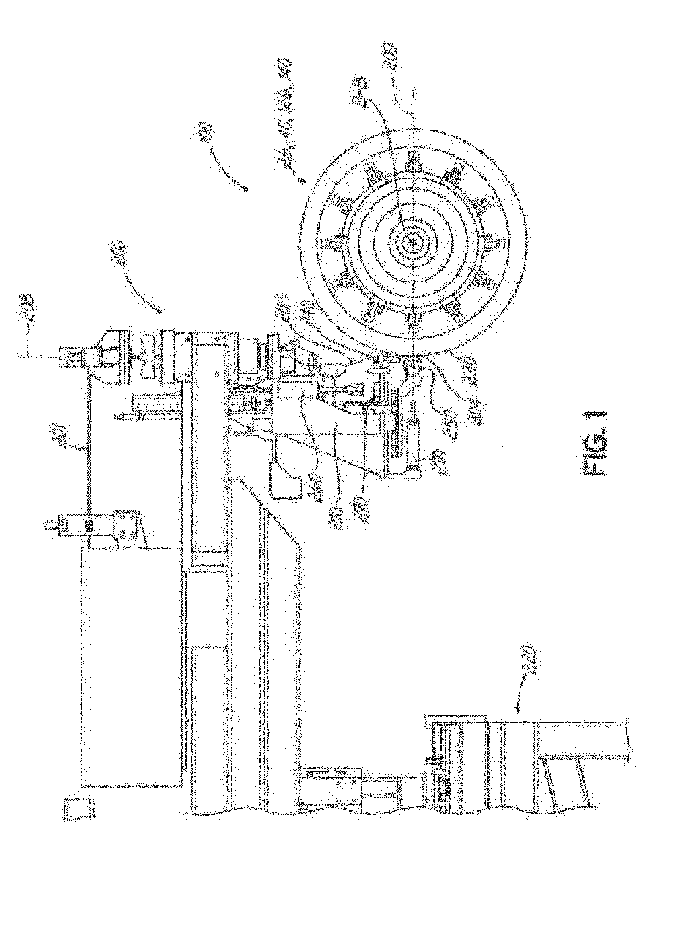

An apparatus 200 in accordance with the present invention may cut and apply, apply and cut, or simultaneously cut and apply a component to a tire during the tire building process (FIG. 1). The component may be, for example, a strip 205 of material for forming a jointless belt structure of a motorcycle tire.

The apparatus 200 is preferably a fully automatic (e.g., controlled by a microprocessor, CPU, process controller, etc.) applier and cutter of the component 200. A rotating head 210 of the apparatus 200 is fitted to an X-Y table 220 so that the component 200 may be applied on a curved tire profile 230 spinning on a drum, such as 26, 40, 126, 140. The strip 205 may include, for example, one, two, or three steel wires or fabric cords (i.e., aramid, nylon, polyester, etc.) with a rubber coating. The motorcycle tire may be a high performance motorcycle radial front and/or rear tire. The fully automatic apparatus 200 preferably picks, places, and applies the component 200 to a tire and cuts the strip 205, thereby readying the strip for the pick, place, and apply procedure of the next tire. The compact size of the head 210 allows a wide range of tire profile codes.

As shown in FIG. 1, the strip 205 may be fed vertically downward coincident with the vertical rotational axis 208 of the head 210, thereby mitigating twisting of the strip during rotation and allowing a steady/uniform application at high speed. To optimize the X-Y position during application to the tire (i.e., tire profile generation), the X-Y application position 204 on the curved tire profile 230 is preferably not only aligned horizontally with the vertical rotational axis 208 of the head (as shown in FIG. 1), but also aligned vertically with the horizontal plane 209 defined by the axis of rotation of the drum 26, 40, 126, 140 (as shown in FIG. 1). When the application of the vertically fed strip 205 to the tire is complete, the X-Y table 220 table may travel horizontally away from the drum 26, 40, 126, 140 in order to allow free space for a cutter 240. During cutting, a stitcher/thread roll 250 may maintain contact with the curved tire profile 230 to keep the control of the vertically fed strip 205. The cutting phase/application position 204 and position of the stitcher/thread roll 250 may be controlled by a vertical cylinder 260 and horizontal cylinders 270.

## Claims

1. An apparatus for cutting and applying a component to a tire during a tire building process, the apparatus (200) comprising an application head (210) rotatable about a vertical axis and fitted to an X-Y table (220) such that the component (205) can be applied to a curved tire profile spinning on a drum (126, 140) of a tire building machine (100), the application head (210) being configured to feed the component (205) vertically downward to a predetermined position coincident with an intersection of the vertical axis of the application head (210) and a horizontal plane defined by a horizontal axis of rotation of the drum (126, 140) of the tire building machine (100).

2. The apparatus as set forth in claim 1 wherein the application head (210) is configured to feed a strip of the component to the predetermined position.

3. The apparatus as set forth in claim 1 or 2 wherein the apparatus (100) comprises means to operate the application head (210) fully automatic and a microprocessor to control the application head (210).

4. The apparatus as set forth in at least one of the previous claims further including a stitcher roll (250) for maintaining contact with the curved tire profile and controlling vertically fed component.

5. The apparatus as set forth in at least one of the previous claims further including a cutter (240) for cutting the component to a predetermined size for the curved tire profile.

6. A system comprising an apparatus in accordance with at least one of the previous claims and a tire building machine (100) comprising a drum (126, 140).

7. The system of claim 6 wherein the tire building machine comprises at least two drums (126, 140).

8. A method for applying a component to one tire or multiple tires on a tire building machine (100), the method comprising the steps of:
orienting an application head (210) to a first predetermined position adjacent to a first green tire rotating on a drum (126, 140) of a tire building machine (100);
feeding the component (205) vertically downward to a second predetermined position coincident with an intersection of a vertical axis of the application head (210) and a horizontal plane defined by a horizontal axis of rotation of the drum (126, 140) of the tire building machine (100);
removing a first part of the component (205) from itself;
stitching the first part of the component (205) to the first green tire;
moving the application head (210) away from the tire building machine (100);
removing the first green tire from the tire building machine (100);
placing a second green tire onto the drum (126, 140) of the tire building machine (100);
orienting the application head (210) to the first predetermined position adjacent to the second green tire rotating on the drum (126, 140) of the tire building machine (100);
feeding the component (205) vertically downward to the second predetermined position;
removing a second part of the component (205) from itself; and
stitching the second part of the component (205) to the second green tire.

9. The method as set forth in claim 8 further including the step of removing the second green tire from the tire building machine (100).

10. The method as set forth in claim 8 or 9 further including the step of feeding the first part of the component to the predetermined position.

11. The method as set forth in at least one of the claims 8, 9 to 10 further including the step of automatically controlling the application head (210) by a microprocessor.

12. The method as set forth in at least one of the claims 8 to 11 further including the step of maintaining a stitcher roll (250) in contact with the first green tire for controlling the vertically fed component.

13. The method as set forth in at least one of the claims 8 to 12 further including the step of cutting the component to a predetermined size for a curved tire profile of the first tire.

14. The method as set forth in at least one of the claims 8 to 13 further including the step of maintaining a stitcher roll (250) in contact with the second green tire for controlling the vertically fed component.
